Europäisches Patentamt

European Patent Office

Office européen des brevets

(11) Numéro de publication: **0 369 084**
A1

# (12) DEMANDE DE BREVET EUROPEEN

(21) Numéro de dépôt: **88402904.2**

(51) Int. Cl.⁵: **B65D 5/50**

(22) Date de dépôt: **18.11.88**

(43) Date de publication de la demande:
**23.05.90 Bulletin 90/21**

(84) Etats contractants désignés:
**BE DE LU NL**

(71) Demandeur: **ROCHETTE CENPA ONDULE**
**2, Rue Louis David**
**F-75782 Paris Cedex 16(FR)**

(72) Inventeur: **Pellegrino, Roger**
**5 bis Route de Pafly**
**F-02200 Cuffies (Soissons)(FR)**

(74) Mandataire: **Laget, Jean-Loup et al**
**Cabinet Pierre Loyer 77, rue Boissière**
**F-75116 Paris(FR)**

(54) **Emballage de regroupement de lots d'objets.**

(57) Emballage de regroupement de lots d'objets dans une caisse. Un insert (2) muni de lumières (5, 6) est placé au fond de la caisse (1). Il est placé entre deux bandes (3, 4) de film thermorétractable, perpendiculaires, et fixées l'une à l'autre dans les lumières (5, 6).

Application au regroupement de lots d'objets de dimensions hétérogènes.

Fig. 1

## Emballage de regroupement de lots d'objets

L'invention concerne un emballage de regroupement de lots d'objets, c'est-à-dire un emballage destiné à recevoir des objets de dimensions hétérogènes, par exemple pour le réapprovisionnement des pharmacies, des parfumeries ou des papeteries.

Pour maintenir, dans une caisse américaine par exemple, des lots d'objets de dimensions variées, il est connu d'utiliser un film plastique thermorétractable. Ce film peut être collé au fond de la caisse et en déborder de deux côtés opposés. Le film peut également être tenu, au fond de la caisse entre les rabats extérieurs d'une part et les rabats intérieurs d'autre part. Il peut également être collé sur les faces latérales d'un insert placé dans la caisse : dans ce cas, il est connu de prévoir deux feuilles collées chacune sur l'une des faces latérales de l'insert.

Tous ces emballages présentent un inconvénient grave : le film n'est pas solidarisé à la caisse avec une sécurité suffisante. De ce fait, lors de la rétraction du film ou lors des manutentions, le film se décolle de la caisse et ne remplit plus son rôle.

Le but de la présente invention est de proposer un emballage de regroupement à film thermorétractable dans lequel le film ne soit pas solidaire de la caisse en carton, et cependant, ne risque pas de se détacher.

L'invention a pour objet un emballage de regroupement de lots d'objets du type comportant une caisse dans laquelle est disposé un insert sur lequel les objets à emballer sont maintenus au moyen d'un film thermorétractable, caractérisé en ce que :
- deux bandes de film thermorétractable sont disposées prependiculairement l'une à l'autre, l'une au dessus et l'autre au dessous de l'insert, et
- l'insert présente au moins une lumière dans laquelle les deux bandes de film sont fixées directement l'une à l'autre, de façon à assurer leur maintien en position relative, d'une part l'une par rapport à l'autre, d'autre part l'une et l'autre par rapport à l'insert.

Selon d'autres caractéristiques de l'invention :
- l'insert comporte au moins un volet destiné à être appliqué sur le fond de la caisse,
- l'insert comporte un volet médian appliqué sur le fond de la caisse et deux volets latéraux, articulés sur le volet médian, et dont les dimensions correspondent à celles de deux faces latérales opposées de la caisse pour immobiliser l'insert et les lots d'objets emballés par rapport à la caisse,
- la fixation réciproque des deux bandes de film thermorétractable est assurée par collage, thermocollage ou soudage.

D'autre caractéristiques ressortent de la description qui suit faite avec référence au dessin annexé sur lequel on peut voir :
Figure 1 : une vue en coupe verticale d'un emballage de regroupement selon l'invention ;
Figure 2 : une vue à plat de l'insert en carton muni de ses deux bandes de film thermorétractable ;
Figure 3 : une vue agrandie en coupe de l'insert de la figure 2 montrant la méthode de fixation réciproque des bandes de film.

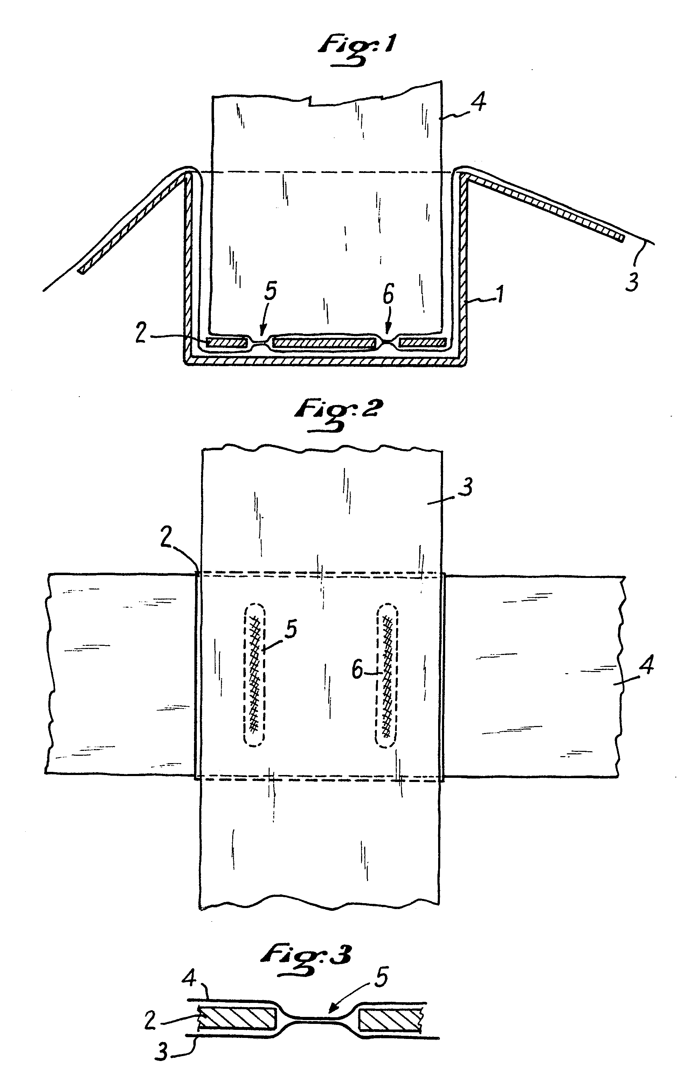

En se reportant à la figure 1 on voit que l'emballage de regroupement selon l'invention est constitué d'une caisse 1 extérieure, en carton par exemple, de type caisse américaine, d'un insert 2 et de deux bandes 3 et 4 de film thermorétractable. L'insert 2 est en carton par exemple ; et il est posé au fond de la caisse.

Il présente une ou plusieurs lumières 5, 6. Il sert de support aux deux bandes 3 et 4 de film thermorétractable. Ces deux bandes sont disposées l'une au dessous et l'autre au dessus de l'insert, respectivement, et de plus elles sont disposées perpendiculairement l'une à l'autre. Dans l'exemple décrit, la première bande 3 passe sous l'insert et sa largeur correspond à la largeur du fond de la caisse, et la seconde bande 4 passe sur l'insert 2 et sa largeur correspond à la longueur du fond de la caisse. A l'emplacement des lumières 5 et 6 (figure 2), les deux bandes de film sont fixées l'une à l'autre, par collage, thermocollage ou soudage, par exemple (figure 3). De ce fait, les bandes sont solidarisées entre elles de manière efficace et persistante, et par voie de conséquence, elles sont solidarisées à l'insert.

Les bandes 3 et 4 sont suffisamment longues pour assurer le recouvrement des objets placés dans la caisse avant d'être soumises à la thermorétraction.

Dans l'exemple représenté, les dimensions de l'insert 2 sont légèrement inférieures à celles du fond de la caisse, de sorte qu'il ne puisse être placé dans la caisse qu'avec une orientation bien déterminée. On peut cependant prévoir un insert de plus petites dimensions, et de forme quelconque, rond par exemple.

De même, l'insert peut être constitué de trois volets articulés l'un sur l'autre, le volet médian étant placé sur le fond de la caisse et les deux volets latéraux appliqués sur deux faces latérales opposées de la caisse. Les objets à emballer sont alors placés dans l'espace délimité par les trois volets.

Quelle que soit la forme de l'insert, sa partie essentielle, appliquée sur le fond de la caisse, présente des lumières 5, 6 pour permettre le collage, le thermocollage, ou le soudage, réciproque des deux bandes 3 et 4 de film thermorétractable l'une sur l'autre. Ce collage assure le maintien en position relative des deux bandes par rapport à l'insert. Ce collage des deux bandes, qui sont constituées de la même matière, est particulièrement efficace. Par rapport aux emballages connus qui utilisent un collage du film sur le carton de la caisse ou de l'insert, le risque d'arrachement ou de décollement se trouve écarté.

Pour la mise en oeuvre de l'emballage selon l'invention, la caisse est présentée ouverte, l'insert est placé au fond de la caisse et les bandes de film dont déployées et rabattues à l'extérieur de la caisse. Les lots d'objets sont disposés dans la caisse, puis les bandes de film sont rabattues par dessus les objets et on procède a la thermorétraction.

Il va de soi que si l'insert se compose de trois volets, les dimensions des volets latéraux correspondent aux dimensions des faces latérales correspondantes de la caisse de façon à immobiliser dans la caisse l'ensemble de l'insert et des lots d'objets tenus par les films thermorétractés, ce qui est souhaitable au cours des manutentions de la caisse.

## Revendications

1. Emballage de regroupement de lots d'objets du type comportant une caisse dans laquelle est disposé un insert sur lequel les objets à emballer sont maintenus au moyen d'un film thermorétractable, caractérisé en ce que :
- deux bandes (3,4) de film thermorétractable sont disposées perpendiculairement l'une à l'autre, l'une au dessus et l'autre au dessous de l'insert, et
- l'insert (2) présente au moins une lumière (5, 6) dans laquelle les deux bandes de film sont fixées directement l'une à l'autre, de façon à assurer leur maintien en position relative, d'une part l'une par rapport à l'autre, d'autre part l'une et l'autre par rapport à l'insert.

2. Emballage selon la revendication 1, caractérisé en ce que l'insert (2) comporte au moins un volet destiné à être appliqué sur le fond de la caisse (1).

3. Emballage selon la revendication 2, caractérisé en ce que l'insert (2) comporte un volet médian appliqué sur le fond de la caisse et deux volets latéraux, articulés sur le volet médian, et dont les dimensions correspondent à celles de deux faces latérales opposées de la caisse (1) pour immobiliser l'insert et les lots d'objets emballés par rapport à la caisse.

4. Emballage selon la revendication 1, caractérisé en ce que la fixation réciproque des deux bandes (3, 4) de film thermorétractable est assurée par collage, thermocollage ou soudage.

EP 0 369 084 A1

Fig.1

Fig.2

Fig.3

**Office européen des brevets**

**RAPPORT DE RECHERCHE EUROPEENNE**

Numero de la demande

EP 88 40 2904

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E | FR-A-2 622 873 (ROCHETTE CENPA ONDULE) <br> * En entier * <br> --- | 1-4 | B 65 D 5/50 |
| A | FR-A-2 564 068 (ROCHETTE CENPA ONDULE) <br> * En entier * <br> --- | 1-3 | |
| A | FR-A-2 426 620 (AVON PRODUCTS) <br> * Page 6, ligne 18 - page 8, ligne 27; figures 1-8 * <br> ----- | 1,2,4 | |

**DOMAINES TECHNIQUES RECHERCHES (Int. Cl.5)**

B 65 D

Le présent rapport a été établi pour toutes les revendications

| Lieu de la recherche | Date d'achèvement de la recherche | Examinateur |
|---|---|---|
| LA HAYE | 05-07-1989 | MARTIN A.G.M. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)